# EUROPÄISCHE PATENTSCHRIFT

(11) **EP 2 940 972 B1**
(45) Veröffentlichungstag und Bekanntmachung des Hinweises auf die Patenterteilung: **21.09.2016**
(21) Anmeldenummer: 14166376.5
(22) Anmeldetag: 29.04.2014
(51) Int. Cl.: H04L 29/12, H04L 29/08

(54) **VERFAHREN ZUR BEREITSTELLUNG EINES NAMENSDIENSTES INNERHALB EINES INDUSTRIELLEN KOMMUNIKATIONSSYSTEMS UND ROUTER**
METHOD FOR PROVIDING A NAME SERVICE WITHIN AN INDUSTRIAL COMMUNICATION SYSTEM AND ROUTER
PROCÉDÉ DE PRÉPARATION D'UN SERVICE DE DÉNOMINATION DANS UN SYSTÈME DE COMMUNICATION INDUSTRIELLE ET ROUTEUR

(43) Veröffentlichungstag der Anmeldung: 04.11.2015
(73) Patentinhaber: Siemens Aktiengesellschaft, 80333 München (DE)
(72) Erfinder: Albrecht, Harald, 90475 Nürnberg (DE)

(56) Entgegenhaltungen:
- US-A1- 2004 230 446
- DANIEL PARK SYAM MADANAPALLI SAMSUNG ELECTRONICS S: "IPv6 Extensions for DNS Plug and Play; draft-park-ipv6-extensions-dns-pnp-00.txt" , 20030401, 1. April 2003 (2003-04-01), XP015004780, ISSN: 0000-0004
- SOOHONG PARK ET AL: "DNS Configuration in IPv6: Approaches, Analysis, and Deployment Scenarios", IEEE INTERNET COMPUTING, IEEE SERVICE CENTER, NEW YORK, NY.- INSTITUTE OF ELECTRICAL AND ELECTRONICS ENGINEERS, US, Bd. 17, Nr. 4, 1. Juli 2013 (2013-07-01), Seiten 48-56, XP011516336, ISSN: 1089-7801, DOI: 10.1109/MIC.2012.96

## Beschreibung

Industrielle Automatisierungssysteme dienen zur Überwachung, Steuerung und Regelung von technischen Prozessen, insbesondere im Bereich Fertigungs-, Prozeß- und Gebäudeautomatisierung, und ermöglichen einen Betrieb von Steuerungseinrichtungen, Sensoren, Maschinen und industriellen Anlagen, der möglichst selbständig und unabhängig von menschlichen Eingriffen erfolgen soll. Aufgrund einer ständig steigenden Bedeutung von Informationstechnik für Automatisierungssysteme, die zahlreiche vernetzte Steuerungs- bzw. Rechnereinheiten umfassen, gewinnen Verfahren zur zuverlässigen Bereitstellung von über ein Automatisierungssystem verteilten Funktionen für eine Bereitstellung von Überwachungs-, Steuerungs- und Regelungsfunktionen verstärkt an Bedeutung.

Unterbrechungen von Kommunikationsverbindungen zwischen Rechnereinheiten eines industriellen Automatisierungssystems oder Automatisierungsgeräten können zu einer unerwünschten oder unnötigen Wiederholung einer Übermittlung einer Dienstanforderung führen. Dies verursacht eine zusätzliche Auslastung von Kommunikationsverbindungen des industriellen Automatisierungssystems, was zu weiteren Systemstörungen oder -fehlern führen kann. Außerdem können nicht oder nicht vollständig übermittelte Nachrichten beispielsweise einen Übergang oder Verbleib eines industriellen Automatisierungssystems in einen sicheren Betriebszustand verhindern. Dies kann schließlich zu einem Ausfall einer kompletten Produktionsanlage und einem kostspieligen Produktionsstillstand führen. Eine besondere Problematik resultiert in industriellen Automatisierungssystemen regelmäßig aus einem Meldungsverkehr mit verhältnismäßig vielen, aber relativ kurzen Nachrichten, wodurch obige Probleme verstärkt werden.

In XP015004780", IPv6 Extensions for DNS Plug and Play; draft-park-ipv6-extensions-dns-pnp-00.txt",1. April 2003 ist ein Verfahren beschrieben, bei dem ein Router einem IPv6 Netzwerkknoten per Router-Advertisement einen "DNS Zone Suffix" zuweist und der Netzwerkknoten seinen Hostnamen als Präfix verwendet um aus dem "DNS Zone Suffix" seinen FQDN zu bilden.

In XP011516336, SOOHONG PARK ET AL: "DNS Configuration in IPv6: Approaches, Analysis, and Deployment Scenarios", IEEE INTERNET COMPUTING, 1. Juli 2013, ist ein Verfahren beschrieben, bei dem IPv6 Netzwerkknoten per Router-Advertisement DNS Konfigurationsinformationen, wie z.B. die Adresse des DNS Server zugewiesen werden.

In WO 2007/144364 A1 ist ein Verfahren zur Vernetzung einer automatisierten Anlage beschrieben, die zumindest eine Zelle mit einem Subnetz umfasst. Das Subnetz ist über einen Router an ein weiteres Subnetz der automatisierten Anlage angebunden. Zur Vernetzung der automatisierten Anlage wird eine Multicastgruppe bereitgestellt, die sich über beide Subnetze erstreckt. Mittels der Multicastgruppe wird eine Kommunikationsnetzadresse einer Kommunikationsnetzschnittstelle einer Baugruppe detektiert. Dabei ist die Baugruppe der Multicastgruppe zuvor über die Kommunikationsnetzadresse beigetreten, und die Kommunikationsnetzschnittstelle ist zuvor an das Subnetz angeschlossen worden. Über die Kommunikationsnetzadresse wird ein Name an die Kommunikationsnetzschnittstelle der Baugruppe zugewiesen. In einem weiteren Schritt erfolgt eine Ermittlung einer weiteren Kommunikationsnetzadresse der Kommunikationsnetzschnittstelle der Baugruppe, die zumindest einen Teil einer numerischen Repräsentation des Namens aufweist.

Aus der älteren europäischen Patentanmeldung mit dem Anmeldeaktenzeichen 14166194.2 ist ein Verfahren zur Konfiguration eines Kommunikationsgeräts innerhalb eines industriellen Automatisierungssystems bekannt, bei dem eine Konfigurationseinheit des Kommunikationsgeräts ein Datagramm mit einer Konfigurationsanforderung an einen Konfigurationsserver übermittelt. Der Konfigurationsserver weist dem Kommunikationsgerät auf die Konfigurationsanforderung zumindest einen ersten topologischen Gerätenamensbestandteil zu, der einer räumlichen oder hierarchischen Anordnung des Konfigurationsservers zuge-ordnet ist. Durch jede weiterleitende Verteilereinheit wird ein weiterer topologischer Gerätenamensbestandteil ergänzt, der einer räumlichen oder hierarchischen Anordnung der jeweiligen weiterleitenden Verteilereinheit zugeordnet ist. Die Konfigurationseinheit des Kommunikationsgeräts erzeugt aus den topologischen Gerätenamensbestandteilen und einem innerhalb seines Teilnetzes eindeutigen Namensbestandteil dessen Gerätenamen.

US 2005 0041671 A1 offenbart ein Kommunikationssystem mit zumindest einem ersten und zweiten Router, bei dem der zweite Router zumindest ein IPv6-Adresspräfix vom ersten Router anfordert. Dabei umfasst der erste Router eine Speichereinheit für IPv6-Adresspräfixe, von denen ein zumindest IPv6-Adresspräfix auf Anforderung des zweiten Routers bekanntgegeben wird. Der zweite Router umfasst eine Einheit zur Erzeugung eines weiteren IPv6-Adresspräfixes auf Basis des durch den ersten Router bekanntgegebenen IPv6-Adresspräfixes. Der weitere IPv6-Adresspräfix wird von einem an den zweiten Router angeschlossenen Kommunikationsgerät zur Erzeugung einer IPv6-Adresse verwendet und hierzu durch den zweiten Router bekanntgegeben.

In US 8 194 661 B2 ist ein Verfahren zur automatischen Konfiguration eines Kommunikationsgeräts innerhalb eines segmentierten Kommunikationsnetzes beschrieben, bei dem durch eine Überwachungseinheit überprüft wird, ob ein empfangenes IPv6-Datenpaket eine Router-Bekanntgabe (Router Advertisement) oder eine Router-Abfrage (Router Solicitation) umfasst. Im Fall einer Router-Abfrage wird eine MAC-Absender-Adresse des Datenpakets durch die Überwachungseinheit aus dem IPv6-Datenpaket entfernt. Außerdem wird durch die Überwachungseinheit eine externe MAC-Adresse in das IPv6-Datenpaket eingefügt, um dieses als Multicast-Nachricht an einem Router weiterzuleiten. Bei einer Router-Bekanntgabe entfernt die Überwachungseinheit eine MAC-Router-Adresse aus dem IPv6-Datenpaket und fügt stattdessen eine interne MAC-Adresse in das IPv6-Datenpaket ein, um dieses als Unicast-Nachricht an das zu konfigurierende Kommunikationsgerät weiterzuleiten.

Der vorliegenden Erfindung liegt die Aufgabe zugrunde, ein einfach realisierbares Verfahren zur Bereitstellung eines Namensdienstes innerhalb eines industriellen Kommunikationssystems zu schaffen, das ein effizientes und zuverlässiges Ansprechen von vernetzten Automatisierungsgeräten über komfortabel handhabbare Namen ermöglicht, und ein geeignetes Kommunikationsgerät anzugeben.

Diese Aufgabe wird erfindungsgemäß durch ein Verfahren mit den in Anspruch 1 angegebenen Merkmalen und durch einen Router mit den in Anspruch 12 angegebenen Merkmalen gelöst. Vorteilhafte Weiterbildungen der vorliegenden Erfindung sind in den abhängigen Patentansprüchen angegeben.

Entsprechend dem erfindungsgemäßen Verfahren werden IPv6-Präfixe durch Router mittels Nachrichten mit Router-Bekanntgaben (Router Advertisements) in jeweils unterlagerten Teilnetzen verbreitet. Die Router-Bekanntgaben umfassen einen topologischen bzw. hierarchischen Namensbestandteil des jeweiligen Routers, wobei der topologische bzw. hierarchische Namensbestandteil einer räumlichen oder hierarchischen Anordnung des jeweiligen Routers zugeordnet ist. Router-Bekanntgaben mit Namensinformationen aus überlagerten Teilnetzen werden durch unterlagerten Teilnetzen zugeordnete Router entgegen genommen und um einen dem jeweiligen Router zugeordneten topologischen bzw. hierarchischen Namensbestandteil ergänzt und innerhalb des jeweiligen unterlagerten Teilnetzes verbreitet. Aus topologischen bzw. hierarchischen Namensbestandteilen und einem innerhalb ihres jeweiligen Teilnetzes eindeutigen Namensbestandteil erzeugen Kommunikationsendgeräte, also Kommunikationsgeräte ohne Routing-Funktionen, selbständig ihren Gerätenamen.

Für das erfindungsgemäße Verfahren muss lediglich beispielsweise ein Basis-Domänenname als Ausgangspunkt für eine automatische Einrichtung eines Namensraums eingerichtet werden. Unterlagerte Namenshierarchieebenen vervollständigen sich in diesem Ausgangspunkt ausgehend automatisch. Dies ermöglicht eine einfache Inbetriebnahme von Serienmaschinen, da aufgrund oben genannter automatischer Vervollständigung lediglich auf Maschinenebene eindeutige Namen auszuwählen sind. Grundsätzlich erfordert das erfindungsgemäße Verfahren zu seiner Realisierung keine zentralisierende oder koordinierende Instanz, wie beispielsweise einen Profinet-IO-Controller.

Entsprechend einer bevorzugten Ausgestaltung des erfindungsgemäßen Verfahrens werden die Router-Bekanntgaben mit Namensinformationen aus überlagerten Teilnetzen durch unterlagerten Teilnetzen zugeordnete Router mittels einer jeweiligen Funktionseinheit zur Implementierung eines verteilten Namensdienstes (z.B. Name Hierarchy Daemon) entgegen genommen. Vorzugsweise werden die Router-Bekanntgaben mit Namensinformationen aus überlagerten Teilnetzen durch unterlagerten Teilnetzen zugeordnete Router mittels dieser jeweiligen Funktionseinheit zur Implementierung der verteilten Namensdienstes um einen dem jeweiligen Router zugeordneten topologischen bzw. hierarchischen Namensbestandteil ergänzt. Vorteilhafterweise ist in jeden Router jeweils eine Funktionseinheit zur Implementierung eines verteilten Namensdienstes integriert. Dies ermöglicht eine besonders einfache Realisierung des erfindungsgemäßen Verfahrens.

Entsprechend einer weiteren Ausgestaltung des erfindungsgemäßen Verfahrens werden die Router-Bekanntgaben, die um einen dem jeweiligen Router zugeordneten topologischen bzw. hierarchischen Namensbestandteil ergänzt sind, mittels einer jeweiligen Funktionseinheit zur Verbreitung von Router-Bekanntgaben (z.B. Router Advertisement Daemon) innerhalb des jeweiligen unterlagerten Teilnetzes verbreitet. Vorteilhafterweise ist in jeden Router jeweils eine Funktionseinheit zur Verbreitung von Router-Bekanntgaben integriert, so dass das erfindungsgemäße Verfahren einheitlich angewendet werden kann.

Die Nachrichten mit Router-Bekanntgaben werden vorzugsweise entsprechend des Internet Control Message Protocol Version 6 übermittelt. Entsprechend einer besonders bevorzugten Ausgestaltung des erfindungsgemäßen Verfahrens umfassen die Nachrichten mit Router-Bekanntgaben jeweils eine Option, mittels der die ergänzten topologischen bzw. hierarchischen Namensbestandteile übermittelt werden. Hierbei kann es sich beispielsweise um eine herstellerspezifische Router Advertisement Option handeln, so dass das erfindungsgemäße Verfahren mit relativ geringem Aufwand in bestehende Kommunikationssysteme integrierbar ist.

Vorzugsweise erzeugen die Kommunikationsendgeräte mittels einer jeweiligen Funktionseinheit zur Implementierung eines verteilten Namensdienstes (z.B. Name Hierarchy Daemon) aus topologischen bzw. hierarchischen Namensbestandteilen und einem innerhalb ihres jeweiligen Teilnetzes eindeutigen Namensbestandteil selbständig ihren Gerätenamen. Entsprechend einer besonders vorteilhaften Ausgestaltung der vorliegenden Erfindung ist in jedes Kommunikationsendgerät jeweils eine Funktionseinheit zur Implementierung eines verteilten Namensdienstes integriert. Damit kann das erfindungsgemäße Verfahren einheitlich in sämtlichen Kommunikationsgeräten angewendet werden.

Topologische bzw. hierarchischer Namensbestandteile können entsprechend einer weiteren Ausgestaltung des erfindungsgemäßen Verfahrens durch DHCPv6-Server (Dynamic Host Configuration Protocol) an Router bereitstellt und dann durch diese verbreitet werden. Beispielsweise können durch einen oder mehrere DHCPv6-Konfigurationsserver Informationen über eine Basis-Domäne oder über unterlagerte Hierarchie- bzw. Topologieebenen bereitstellt werden, und zwar einzeln oder in Kombination. Dies ermöglicht eine erhebliche Reduktion von administrativem Aufwand und eine Eliminierung potentieller Fehlerquellen.

Der erfindungsgemäße Router ist zur Durchführung eines Verfahrens entsprechend vorangehenden Ausführungen geeignet und bestimmt. Konkret ist der Router dafür ausgestaltet und eingerichtet, dass IPv6-Präfixe mittels Nachrichten mit Router-Bekanntgaben in jeweils unterlagerten Teilnetzen verbreitet werden. Die Router-Bekanntgaben (Router Advertisements) umfassen einen topologischen bzw. hierarchischen Namensbestandteil des jeweiligen Routers, wobei der topologische bzw. hierarchische Namensbestandteil einer räumlichen oder hierarchischen Anordnung des Routers zugeordnet ist. Darüber hinaus ist der Router dafür ausgestaltet und eingerichtet, dass Router-Bekanntgaben mit Namensinformationen aus überlagerten Teilnetzen entgegen genommen und um einen dem Router zugeord-neten topologischen bzw. hierarchischen Namensbestandteil ergänzt und innerhalb des jeweiligen unterlagerten Teilnetzes verbreitet werden.

Zur Entgegennahme der Router-Bekanntgaben mit Namensinformationen aus überlagerten Teilnetzen ist vorzugsweise eine Funktionseinheit zur Implementierung eines verteilten Namensdienstes vorgesehen. Darüber hinaus kann diese Funktionseinheit zusätzlich zur Ergänzung der Router-Bekanntgaben mit Namensinformationen um den dem Router zugeordneten topologischen bzw. hierarchischen Namensbestandteil vorgesehen sein. Zur Verbreitung der Router-Bekanntgaben, die um den dem Router zugeordneten topologischen bzw. hierarchischen Namensbestandteil ergänzt sind, ist vorteilhafterweise eine Funktionseinheit zur Verbreitung von Router-Bekanntgaben vorgesehen. Damit ist ein modulares Konzept zur Integration der vorliegenden Erfindung in bestehende Kommunikationssysteme geschaffen.

Die vorliegende Erfindung wird nachfolgend an einem Ausführungsbeispiel anhand der Zeichnung näher erläutert. Es zeigt
- Figur 1: eine schematische Darstellung eines industriellen Automatisierungssystems mit mehreren IPv6-Routern, Teilnetzen und zu konfigurierenden Automatisierungsgeräten,
- Figur 2: eine schematische Darstellung eines Datenaustauschs zwischen einem IPv6-Router und einem zu konfigurierenden Automatisierungsgerät.

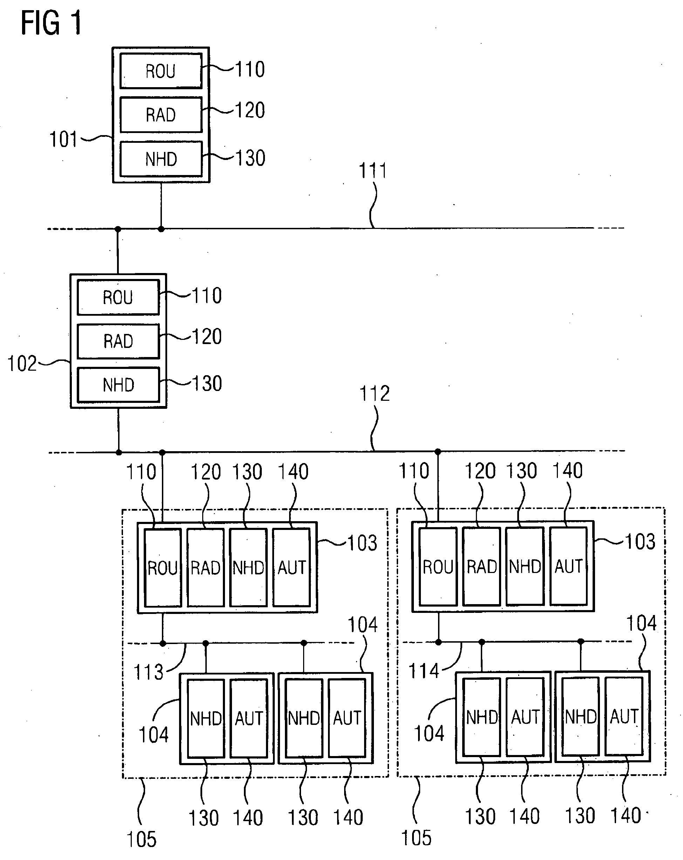

Das in Figur 1 schematisch dargestellte industrielle Automatisierungssystem umfasst einen Router 101, der einer Basis-Domäne zugeordnet ist, mehrere Teilnetze 111-114 mit zugeordneten Routern 102 bzw. Routing-Funktionen aufweisenden Automatisierungsgeräten 103 und eine Mehrzahl modularer Automatisierungsgeräte 104 ohne Routing-Funktionen. Die Automatisierungsgeräte 104 sind beispielsweise speicherprogrammierbare Steuerungen einer komplexen Maschine 105 und umfassen jeweils ein Kommunikationsmodul mit einer Funktionseinheit 130 zur Implementierung eines verteilten Namensdienstes (Name Hierarchy Daemon) und ein Automatisierungsmodul 140. Eine komplexe Maschine 105 kann auch Automatisierungsgeräte 103 mit einem integrierten Routing-Modul 110 und einer Funktionseinheit 120 zur Verbreitung von Router-Bekanntgaben (Router Advertisement Daemon) innerhalb eines maschineninternen Teilnetzes 113, 114 umfassen.
Die Automatisierungsmodule 140 umfassen jeweils zumindest eine Zentraleinheit und eine Eingabe/Ausgabe-Einheit. Die Eingabe/Ausgabe-Einheiten dienen einem Austausch von Steuerungs- und Messgrößen zwischen dem jeweiligen Automatisierungsgerät 103, 104 und einer durch das Automatisierungsgerät 103, 104 gesteuerten Maschine oder Vorrichtung. Die Zentraleinheiten der Automatisierungsmodule 140 sind insbesondere für eine Ermittlung geeigneter Steuerungsgrößen aus erfassten Messgrößen vorgesehen. Obige Komponenten der Automatisierungsgeräte 103, 104 sind im vorliegenden Ausführungsbeispiel über ein Rückwandbus-System miteinander verbunden.

Sämtliche Router 101, 102 umfassen im vorliegenden Ausführungsbeispiel neben einem Routing-Modul 110 einen Router Advertisement Daemon 120 und einen Name Hierarchy Daemon 130. Mittels der Router Advertisement Daemons 120 verbreiten die Router 101, 102 bzw. Automatisierungsgeräte 103 mit Routing-Funktionen IPv6-Präfixe in jeweils unterlagerten Teilnetzen 111-114. Dabei sind die IPv6-Präfixe Bestandteile von Nachrichten mit Router Advertisements, die entsprechend Internet Control Message Protocol Version 6 übermittelt werden. Die Router Advertisements umfassen einen topologischen bzw. hierarchischen Namensbestandteil des jeweiligen Routers, wobei der topologische bzw. hierarchische Namensbestandteil einer räumlichen oder hierarchischen Anordnung des jeweiligen Routers zugeordnet ist.

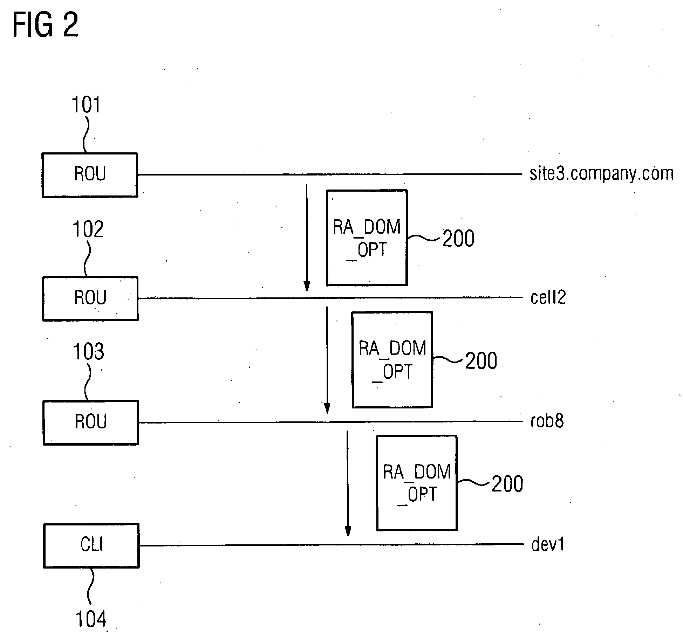

Entsprechend Figur 2 fügt der Router 101, welcher der Basis-Domäne zugeordnet ist, seinen Nachrichten 200 mit Router Advertisements im vorliegenden Ausführungsbeispiel den Namensbestandteil "site3.company.com" mittels einer herstellerspezifische Option RA_DOM_OPT hinzu. Durch jeden unterlager-ten Router 102 bzw. jedes Automatisierungsgerät 103 mit Routing-Funktionen wird ein weiterer topologischer bzw. hierarchischer Namensbestandteil ergänzt, der einer räumlichen oder hierarchischen Anordnung des jeweiligen Routers 102 bzw. Automatisierungsgeräts 103 zugeordnet ist. Entsprechende räumliche oder hierarchische Angaben, im vorliegenden Ausführungsbeispiel "cell2" und "rob8" werden dabei wahlweise zu einer bereits vorhandenen Option RA_DOM_OPT hinzugefügt oder als weitere Optionen RA_DOM_OPT angehängt.

Router Advertisements mit Namensinformationen aus überlagerten Teilnetzen werden mittels des jeweiligen Name Hierarchy Daemon 130 durch unterlagerten Teilnetzen zugeordnete Router 102 bzw. Automatisierungsgeräte 103 entgegen genommen und um einen dem jeweiligen Router 102 bzw. Automatisierungsgerät 103 zugeordneten topologischen bzw. hierarchischen Namensbestandteil ergänzt. Mittels des jeweiligen Router Advertisement Daemon 120 werden die Router Advertisements mit den ergänzten Namensinformationen innerhalb des jeweiligen unterlagerten Teilnetzes verbreitet.

Die Automatisierungsgeräte 103, 104 erzeugen jeweils mittels ihres Name Hierarchy Daemon 130 aus empfangenen topologischen bzw. hierarchischen Namensbestandteilen und einem innerhalb ihres jeweiligen Teilnetzes eindeutigen Namensbestandteil selbständig ihren Gerätenamen. Hierzu werten die Automatisierungsgeräte 103, 104 die herstellerspezifische Option RA_DOM_OPT der Router Advertisements aus.

Die Router 101, 102 bzw. die Automatisierungsgeräte 103 mit Routing-Funktionen sind zur Durchführung des vorangehend beschriebenen Verfahrens konfiguriert, insbesondere dafür, dass IPv6-Präfixe mittels Nachrichten mit Router Advertisements in jeweils unterlagerten Teilnetzen verbreitet werden, und dass Router Advertisements mit Namensinformationen aus überlagerten Teilnetzen entgegen genommen und um einen dem Router zugeordneten topologischen bzw. hierarchischen Namensbestandteil ergänzt und innerhalb des jeweiligen unterlagerten Teilnetzes verbreitet werden.

## Patentansprüche

1. Verfahren zur Bereitstellung eines Namensdienstes innerhalb eines industriellen Kommunikationssystems, bei dem
- IPv6-Präfixe durch Router mittels Nachrichten mit Router-Bekanntgaben in jeweils unterlagerten Teilnetzen verbreitet werden, wobei die Router-Bekanntgaben einen topologischen und/oder hierarchischen Namensbestandteil des jeweiligen Routers umfassen, und wobei der topologische und/oder hierarchische Namensbestandteil einer räumlichen oder hierarchischen Anordnung des jeweiligen Routers zugeordnet ist,
- Router-Bekanntgaben mit Namensinförmationen aus überlagerten Teilnetzen durch unterlagerten Teilnetzen zugeordnete Router entgegen genommen und um einen dem jeweiligen Router zugeordneten topologischen und/oder hierarchischen Namensbestandteil ergänzt und innerhalb des jeweiligen unterlagerten Teilnetzes verbreitet werden,
- Kommunikationsendgeräte aus topologischen und/oder hierarchischen Namensbestandteilen und einem innerhalb ihres jeweiligen Teilnetzes eindeutigen Namensbestandteil selbständig ihren Gerätenamen erzeugen.

2. Verfahren nach Anspruch 1,
bei dem die Router-Bekanntgaben mit Namensinformationen aus überlagerten Teilnetzen durch unterlagerten Teilnetzen zugeordnete Router mittels einer jeweiligen Funktionseinheit zur Implementierung eines verteilten Namensdienstes entgegen genommen werden.

3. Verfahren nach Anspruch 2,
bei dem die Router-Bekanntgaben mit Namensinformationen aus überlagerten Teilnetzen durch unterlagerten Teilnetzen zugeordnete Router mittels der jeweiligen Funktionseinheit zur Implementierung der verteilten Namensdienstes um einen dem jeweiligen Router zugeordneten topologischen und/oder hierarchischen Namensbestandteil ergänzt werden.

4. Verfahren nach einem der Ansprüche 2 oder 3,
bei dem in jeden Router jeweils eine Funktionseinheit zur Implementierung eines verteilten Namensdienstes integriert ist.

5. Verfahren nach einem der Ansprüche 1 bis 4,
bei dem die um einen dem jeweiligen Router zugeordneten topologischen und/oder hierarchischen Namensbestandteil ergänzten Router-Bekanntgaben mittels einer jeweiligen Funktionseinheit zur Verbreitung von Router-Bekanntgaben innerhalb des jeweiligen unterlagerten Teilnetzes verbreitet werden.

6. Verfahren nach Anspruch 5,
bei dem in jeden Router jeweils eine Funktionseinheit zur Verbreitung von Router-Bekanntgaben integriert ist.

7. Verfahren nach einem der Ansprüche 1 bis 6,
bei dem die Nachrichten mit Router-Bekanntgaben entsprechend Internet Control Message Protocol Version 6 übermittelt werden.

8. Verfahren nach Anspruch 7,
bei dem die Nachrichten mit Router-Bekanntgaben jeweils eine Option umfassen, mittels der die ergänzten topologischen und/oder hierarchischen Namensbestandteile übermittelt werden.

9. Verfahren nach einem der Ansprüche 1 bis 8,
bei dem die Kommunikationsendgeräte mittels einer jeweiligen Funktionseinheit zur Implementierung eines verteilten Namensdienstes aus topologischen und/oder hierarchischen Namensbestandteilen und einem innerhalb ihres jeweiligen Teilnetzes eindeutigen Namensbestandteil selbständig ihren Gerätenamen erzeugen.

10. Verfahren nach Anspruch 9,
bei dem in jedes Kommunikationsendgerät jeweils eine Funktionseinheit zur Implementierung eines verteilten Namensdienstes integriert ist.

11. Verfahren nach einem der Ansprüche 1 bis 10,
bei dem zumindest ein topologischer und/oder hierarchischer Namensbestandteil durch zumindest einen DHCPv6-Server an zumindest einen Router bereitstellt und durch diesen verbreitet wird.

12. Router zur Durchführung eines Verfahrens nach einem der Ansprüche 1 bis 11,
- wobei der Router dafür ausgestaltet und eingerichtet ist, dass IPv6-Präfixe mittels Nachrichten mit Router-Bekanntgaben in jeweils unterlagerten Teilnetzen verbreitet werden, wobei die Router-Bekanntgaben einen topologischen und/oder hierarchischen Namensbestandteil des jeweiligen Routers umfassen, und wobei der topologische und/oder hierarchische Namensbestandteil einer räumlichen oder hierarchischen Anordnung des Routers zugeordnet ist,
- wobei der Router dafür ausgestaltet und eingerichtet ist, dass Router-Bekanntgaben mit Namensinformationen aus überlagerten Teilnetzen entgegen genommen und um einen dem Router zügeordneten topologischen und/oder hierarchischen Namensbestandteil ergänzt und innerhalb des jeweiligen unterlagerten Teilnetzes verbreitet werden.

13. Router nach Anspruch 12,
bei dem zur Entgegennahme der Router-Bekanntgaben mit Namensinformationen aus überlagerten Teilnetzen eine Funktionseinheit zur Implementierung eines verteilten Namensdienstes vorgesehen ist.

14. Router nach Anspruch 13,
bei dem die Funktionseinheit zur Implementierung des verteilten Namensdienstes zusätzlich zur Ergänzung der Router-Bekanntgaben mit Namensinformationen um den dem Router zugeordneten topologischen und/oder hierarchischen Namensbestandteil vorgesehen ist.

15. Router nach einem der Ansprüche 12 bis 14,
bei dem zur Verbreitung der um den dem Router zugeordneten topologischen und/oder hierarchischen Namensbestandteil ergänzten Router-Bekanntgaben eine Funktionseinheit zur Verbreitung von Router-Bekanntgaben vorgesehen ist.

## Claims

1. Method for providing a naming service inside an industrial communication system, in which
- IPv6 prefixes are distributed in respectively subordinate subnetworks by routers by means of messages containing router advertisements, the router advertisements comprising a topological and/or hierarchical name component of the respective router, and the topological and/or hierarchical name component being associated with a spatial or hierarchical arrangement of the respective router,
- router advertisements containing name information from superordinate subnetworks are received by routers associated with subordinate subnetworks and are supplemented with a topological and/or hierarchical name component associated with the respective router and are distributed inside the respective subordinate subnetwork,
- communication terminals independently generate their device name from topological and/or hierarchical name components and a unique name component inside their respective subnetwork.

2. Method according to Claim 1,
in which the router advertisements containing name information from superordinate subnetworks are received by routers associated with subordinate subnetworks by means of a respective functional unit for implementing a distributed naming service.

3. Method according to Claim 2,
in which the router advertisements containing name information from superordinate subnetworks are supplemented, by routers associated with subordinate subnetworks, with a topological and/or hierarchical name component associated with the respective router by means of the respective functional unit for implementing the distributed naming service.

4. Method according to either of Claims 2 and 3,
in which a functional unit for implementing a distributed naming service is respectively integrated in each router.

5. Method according to one of Claims 1 to 4,
in which the router advertisements supplemented with a topological and/or hierarchical name component associated with the respective router are distributed inside the respective subordinate subnetwork by means of a respective functional unit for distributing router advertisements.

6. Method according to Claim 5,
in which a functional unit for distributing router advertisements is respectively integrated in each router.

7. Method according to one of Claims 1 to 6,
in which the messages containing router advertisements are transmitted according to the Internet Control Message Protocol Version 6.

8. Method according to Claim 7,
in which the messages containing router advertisements each comprise an option which is used to transmit the supplemented topological and/or hierarchical name components.

9. Method according to one of Claims 1 to 8,
in which the communication terminals independently generate their device name from topological and/or hierarchical name components and a unique name component inside their respective subnetwork by means of a respective functional unit for implementing a distributed naming service.

10. Method according to Claim 9,
in which a functional unit for implementing a distributed naming service is respectively integrated in each communication terminal.

11. Method according to one of Claims 1 to 10,
in which at least one topological and/or hierarchical name component is made available to at least one router by at least one DHCPv6 server and is distributed by said router.

12. Router for carrying out a method according to one of Claims 1 to 11,
- wherein the router is configured and set up in such a manner that IPv6 prefixes are distributed in respectively subordinate subnetworks using messages containing router advertisements, the router advertisements comprising a topological and/or hierarchical name component of the respective router, and the topological and/or hierarchical name component being associated with a spatial or hierarchical arrangement of the router,
- wherein the router is configured and set up in such a manner that router advertisements containing name information from superordinate subnetworks are received and are supplemented with a topological and/or hierarchical name component associated with the router and are distributed inside the respective subordinate subnetwork.

13. Router according to Claim 12,
in which a functional unit for implementing a distributed naming service is provided for the purpose of receiving the router advertisements containing name information from superordinate subnetworks.

14. Router according to Claim 13,
in which the functional unit for implementing the distributed naming service is additionally provided for the purpose of supplementing the router advertisements containing name information with the topological and/or hierarchical name component associated with the router.

15. Router according to one of Claims 12 to 14,
in which a functional unit for distributing router advertisements is provided for the purpose of distributing the router advertisements supplemented with the topological and/or hierarchical name component associated with the router.

## Revendications

1. Procédé de mise à disposition d'un service de dénomination dans un système de communication industrielle, dans lequel
- on diffuse des préfixes IPv6 par des routeurs au moyen de messages ayant des notifications de routeur dans respectivement des sous-réseaux inférieurs hiérarchiquement, les notifications de routeur comprenant un constituant de dénomination topologique et/ou hiérarchique du routeur respectif et dans lequel le constituant de dénomination topologique et/ou hiérarchique est affecté à un agencement spatial ou hiérarchique du routeur respectif,
- on reçoit des notifications de routeur ayant des informations de dénomination à partir de sous-réseaux supérieurs hiérarchiquement par des routeurs affectés à des sous-réseaux inférieurs hiérarchiquement et on les complète d'un constituant de dénomination topologique et/ou hiérarchique affecté au routeur respectif et on les diffuse au sein du sous-réseau inférieur hiérarchiquement respectif,
- des terminaux de communication produisent de manière autonome leur dénomination d'appareil à partir de constituants de dénomination topologiques et/ou hiérarchiques et d'un constituant de dénomination univoque au sein de leur sous-réseau respectif.

2. Procédé suivant la revendication 1,
dans lequel on reçoit les notifications de routeur ayant des informations de dénomination à partir de sous-réseaux supérieurs hiérarchiquement par des routeurs affectés aux sous-réseaux inférieurs hiérarchiquement au moyen d'une unité fonctionnelle respective de mise en oeuvre d'un service de dénomination réparti.

3. Procédé suivant la revendication 1,
dans lequel on complète, d'un constituant de dénomination topologique et/ou hiérarchique associé au routeur respectif les notifications de routeur ayant des informations de dénomination provenant de sous-réseaux supérieurs hiérarchiquement par des routeurs affectés aux sous-réseaux inférieurs hiérarchiquement au moyen de l'unité fonctionnelle respective de mise en oeuvre du service de dénomination réparti.

4. Procédé suivant l'une des revendications 2 ou 3,
dans lequel, dans chaque routeur est intégré respectivement une unité fonctionnelle de mise en oeuvre d'un service de dénomination réparti.

5. Procédé suivant l'une des revendications 1 à 4,
dans lequel on diffuse au sein du sous-réseau respectif inférieur hiérarchiquement une notification de routeur complétée d'un constituant de dénomination topologique et/ou hiérarchique affecté au routeur respectif au moyen d'une unité fonctionnelle respective de diffusion de notification de routeur.

6. Procédé suivant la revendication 5,
dans lequel il est intégré dans chaque routeur respectivement une unité fonctionnelle de diffusion de notification de routeur.

7. Procédé suivant l'une des revendications 1 à 6,
dans lequel on transmet les messages ayant des notifications de routeur conformément à la version 6 de l'Internet Control Message Protocol.

8. Procédé suivant la revendication 7,
dans lequel les messages ayant des notifications de routeurs comprennent respectivement une option au moyen de laquelle les constituants de dénomination topologiques et/ou hiérarchiques complétés sont transmis.

9. Procédé suivant l'une des revendications 1 à 8,
dans lequel les terminaux de communication produisent de manière autonome leur nom d'appareil au moyen d'une unité fonctionnelle respective de mise en oeuvre d'un service de dénomination réparti à partir de constituants de dénomination topologiques et/ou hiérarchiques et d'un constituant de dénomination univoque au sein de leur sous-réseau respectif.

10. Procédé suivant la revendication 9,
dans lequel il est intégré dans chaque terminal de communication respectivement une unité fonctionnelle de mise en oeuvre d'un service de dénomination réparti.

11. Procédé suivant l'une des revendications 1 à 10,
dans lequel on met à disposition sur au moins un routeur par au moins un serveur DHCPv6 au moins un constituant de dénomination topologique et/ou hiérarchique et on le diffuse par ce routeur.

12. Routeur pour effectuer un procédé suivant l'une des revendications 1 à 11,
- dans lequel le routeur est conformé et conçu pour diffuser des préfixes IPv6 au moyen de messages ayant des notifications de routeur dans respectivement des sous-réseaux inférieurs hiérarchiquement, les notifications de routeur comprenant un constituant de dénomination topologique et/ou hiérarchique du routeur respectif et le constituant de dénomination topologique et/ou hiérarchique étant affecté à un agencement spatial ou hiérarchique du routeur,
- dans lequel le routeur est conçu pour recevoir des notifications de routeur ayant des informations de dénomination à partir de sous-réseaux supérieurs hiérarchiquement et pour les compléter d'un constituant de dénomination topologique et/ou hiérarchique affecté au routeur et pour les diffuser au sein du sous-réseau respectif inférieur hiérarchiquement.

13. Routeur suivant la revendication 12,
dans lequel, pour la réception des notifications de routeur ayant des informations de dénomination à partir de sous-réseaux supérieurement hiérarchiquement, il est prévu une unité fonctionnelle de mise en oeuvre d'un service de dénomination réparti.

14. Routeur suivant la revendication 13,
dans lequel l'unité fonctionnelle de mise en oeuvre du service de dénomination réparti est prévue en outre pour compléter les notifications de routeur ayant des informations de dénomination du constituant de dénomination topologique et/ou hiérarchique affecté au routeur.

15. Routeur suivant l'une des revendications 12 à 14,
dans lequel, pour la diffusion des notifications de routeur, complétées du constituant de dénomination topologique et/ou hiérarchique affectée au routeur, il est prévu une unité fonctionnelle de diffusion de notification de routeur.
